# EUROPÄISCHE PATENTANMELDUNG

(11) **EP 0 534 461 A1**
(43) Veröffentlichungstag der Anmeldung: **31.03.1993**
(21) Anmeldenummer: 92116468.7
(22) Anmeldetag: 25.09.1992
(51) Int. Cl.: B64D 17/02, B64D 17/24

(54) **Gleitschirm**

(30) Priorität: 26.09.1991 DE 4132106
(71) Anmelder: Stöllinger, Herbert, D-83435 Bad Reichenhall (DE)
(72) Erfinder: Stöllinger, Herbert, D-83435 Bad Reichenhall (DE)
(74) Vertreter: KUHNEN, WACKER & PARTNER

(57) **Zusammenfassung**

Bei einem Gleitschirm (2) sind die von den Hauptgurten (24, 26) des Gurtzeuges ausgehenden Leinenscharen (12, 12', 14, 14') einer Verleinung (10) zwischen Gurtzeug und Schirmkappe (4) sich überkreuzend so verlaufend angeordnet, daß die Schirmkappe (4) jeden der Hauptgurte (24, 26) mit im wesentlichen gleich verlaufenden Kräften trägt. Die Flugstabilität und Unempfindlichkeit gegenüber turbulenten Luftströmungen wird hierdurch erheblich verbessert.

## Beschreibung

Die Erfindung geht aus von einen Gleitschirm nach dem Oberbegriff des Anspruches 1, wie er auch aus der DE-A-34 10 871 bekannt geworden ist.

Das Gleitschirmfliegen oder Paragliden hat in den letzten Jahren eine starke Verbreitung erfahren. Das hierzu verwendete Sportgerät, der Gleitschirm, besteht aus einem für gewöhnlich textilen Material mit einer Formgebung derart, daß sich durch den Anlauf oder Gegenwind beim Start und den späteren Fahrtwind ein Staudruck und durch diesen wiederum ein tragflächenartiges Flügelprofil der Schirmkappe aufbaut. Dieses tragflächenartige Profil erzeugt dann durch die anströmende Luft und/oder thermische Aufwinde den nötigen Auftrieb für den Steig- oder Gleitflug, ähnlich wie dies beim Segelfliegen bekannt ist. Der den Gleitschirm fliegende Pilot hängt unterhalb der Schirmkappe in einem entsprechend ausgebildeten Gurtzeug und die Verbindung zwischen Schirmkappe und dem Gurtzeug des Piloten erfolgt über eine Vielzahl von dünnen Leinen.

Die Leinen verlaufen hierbei ausgehend von zwei links und rechts im Brustbereich des Gurtzeuges angeordneten nach oben verlaufenden Gurtteilen, den sogenannten Hauptgurten oder Risern, nach oben in Richtung auf die Schirmkappe. Der Verlauf der Leinen ist hierbei symmetrisch zu einer vertikal verlaufenden Mittellängsachse des Schirmes, so daß von dem linken Riser ausgehende Leinen zur linken Hälfte der Schirmkappe verlaufen und vom rechten Riser ausgehende Leinen zur rechten Hälfte der Schirmkappe verlaufen. Von der Schmalseite der Schirmkappe her betrachtet sind hierbei darüberhinaus die Leinen pro Riser derart scharweise zusammengefaßt, daß ausgehend von beispielsweise dem rechten Riser eine Leinenschar nach oben in Richtung auf die Vorderkante der Schirmkappe verläuft, zwei weitere Leinenscharen ebenfalls ausgehend von dem gleichen Riser in Richtung mittleres Drittel der Schirmkappe verlaufen und eine vierte Leinenschar ausgehend von dem Riser in Richtung hinteres Drittel der Schirmkappe verläuft. Diese vier Leinenscharen, die von jedem Riser ausgehen, werden auch als A-, B-, C- und D-Aufhängung bezeichnet. In Richtung der in Flugrichtung gesehen hinteren Kante der Schirmkappe, also am Ende des Kappenprofils, verlaufen noch Steuerleinen, mit denen der Schirm während des Fluges lenkbar ist.

Die jeweils linken und rechten A- bis D-Aufhängungen zusammenfassenden Riser werden mit entsprechend dimensionierten Karabinerhaken am Gurtzeug des Piloten eingehängt. Das Gurtzeug ist hierbei so geschnitten, daß der Pilot während des Fluges eine bequeme Sitzhaltung einnehmen kann. Er hängt somit nicht unter der Schirmkappe wie beispielsweise bei einem Fallschirm, sondern er "sitzt" in dem Gurtzeug.

Beim Gleitschirmfliegen gibt es einige subjektive und objektive Gefahrenpunkte.

Die wesentlichste objektive Gefahrenquelle sind turbulente Luftströmungen, die im ungünstigen Fall zu einem Einklappen eines Teils der Schirmkappe führen können. Durch das seitliche Einklappen der Schirmkappe gerät der Gleitschirm in eine aerodynamisch unstabile Phase, da das Schirmkappenprofil seine tragflächenartige Ausbildung verliert. Der Schirm kann unlenkbar werden und abstürzen.

Demgegenüber ist es von daher Aufgabe der vorliegenden Erfindung, einen Gleitschirm nach dem Oberbegriff des Anspruches 1 so auszubilden, daß auch bei turbulenten Luftströmungen Auftriebsstörungen durch seitliches Einklappen der Kappe minimiert sind.

Die Lösung dieser Aufgabe erfolgt erfindungsgemäß durch die im Anspruch 1 angegebenen Merkmale.

Bei dem Gleitschirm gemäß der vorliegenden Erfindung verlaufen von jedem Riser oder Hauptgurt aus Leinen auch zur jeweils gegenüberliegenden Seite der Kappe. Mit anderen Worten, die beispielsweise vom rechten Riser oder Hauptgurt aus verlaufenden Leinen sind nicht wie bisher sämtlich an der rechten Stirnkappenhälfte befestigt, sondern einige dieser Leinen verlaufen auch zur linken Schirmkappenhälfte. Analog dazu verlaufen einige von dem linken Riser oder Hauptgurt ausgehende Leinen zur rechten Schirmkappenhälfte. Hierdurch wird erreicht, daß jeder Riser von der gesamten Schirmkappe getragen wird und nicht nur von der unmittelbar darüberliegenden Schirmkappenhälfte.

Der erfindungsgemäße Gleitschirm zeichnet sich durch sehr hohe Flugstabilität auch bei turbulenten Luftströmungen aus, da ein seitliches Einklappen der Schirmkappe nicht mehr auf den darunterliegenden linken oder rechten Hauptgurt alleine wirkt. Diese einseitige Einklappbewegung einer Schirmhälfte wird bei bekannten Gleitschirmen in besonders nachteiliger Weise dadurch verstärkt, daß aufgrund der symmetrischen Aufhängung der Schirmkappe am Gurtzeug des Piloten und somit der symmetrischen Verteilung der Leinenscharen für linke und rechten Schirmkappenhälfte bei einer beispielsweise auf der rechten Seite einklappenden Schirmkappe durch die hierdurch nachgebenden rechten Leinenscharen der Körper des Piloten auf der rechten Seite nicht mehr ausreichend gehalten wird und nach rechts unten abkippt. Diese Abkippbewegung des Körpers des Piloten wiederum kann über die auf der rechten Seite befindlichen Leinenscharen zusätzlichen Zug auf die bereits sich einklappende rechte Schirmkappenhälfte ausüben, so daß die dortige Einklappbewegung noch weiter verstärkt wird. Zwar sind erfahrene Piloten zumeist ohne weiteres in der Lage, derartige Einklapptendenzen der Schirmkappe aufzufangen bzw. zu korrigieren, es ereignen sich dennoch in jedem Jahr mehrere Unfälle, teils mit tödlichem Ausgang.

Da jedoch bei dem erfindungsgemäßen Gleitschirm bei einer seitlichen Einklappbewegung der Schirmkappe die darunterliegende Körperhälfte des Piloten diese Einklappbewegung nicht zusätzlich verstärken kann, da die Schirmkappe über ihre gesamte Quererstreckung gleichmäßig an beiden Risern hängt, stabilisiert sich diese Einklappbewegung aufgrund der hierzu vorgesehenen schirminternen Querbelüftungskanäle im Inneren des Staudruckprofiles sehr rasch wieder von selbst.

Zu der wesentlichen objektive Gefahr turbulenter Luftströmungen kommt beim Gleitschirmfliegen noch die weitere objektive Gefahr eines Bruches eines der Karabiner, mit dem die jeweiligen Leinenscharen bzw. der zugehörige Riser am Gurtzeug befestigt werden. Bei einem Bruch eines dieser Karabiner löst sich die gesamte Verbindung zwischen Gurtzeug bzw. Piloten und einer der Schirmkappenhälften, was bei bekannten Schirmen den Schirm unlenkbar macht und zwangsläufig zum Absturz führt. Auch die Gefahr eines Karabinerbruches an einem der Riser bzw. deren Auswirkung ist bei dem erfindungsgemäßen Schirm weitestgehend aufgehoben, da aufgrund der gleichmäßigen Aufhängung der Schirmkappe an jedem der beiden Riser bei einem Lösen oder Brechen eines der Karabiner die gesamte Schirmkappe noch an dem anderen Riser hängt und der Schirm somit weitestgehend flugfähig und lenkbar bleibt.

Zu den objektiven Gefahren kommen beim Gleitschirmfliegen noch einige subjektive, also vom Piloten ausgehende Gefahrenpunkte. Hierzu zählt in diesem Zusammenhang insbesondere das unvollständige oder nicht korrekte Einhängen eines der Karabiner zwischen Gurtzeug und Riser, was bei bekannten Schirmen im ungünstigen Fall zu dem gleichen Effekt wie bei einem Karabinerbruch führen kann. Beim erfindungsgemäßen Gleitschirm bleibt jedoch bei einem Lösen eines der Karabiner die gesamte Schirmkappe noch an dem anderen Riser hängen und der Schirm somit weitestgehend flugfähig und lenkbar.

Der erfindungsgemäße Gleitschirm zeichnet sich weiterhin dadurch aus, daß beim Start eine asymmetrische Zugbelastung der beiden Riser nicht dazu führt, daß der Schirm während seines Auffaltvorganges seitlich wegkippt und den Piloten zum Abbrechen des Startvorganges zwingt. Da bei dem erfindungsgemäßen Gleitschirm die Kraftverteilung ausgehend von beiden Risern weitestgehend gleichmäßig über die gesamte Quererstreckung der Schirmkappe erfolgt, wird bei einem asymmetrischen Ziehen an den beiden Risern während des Startvorganges die Schirmkappe dennoch weitestgehend stabil bleiben und sich rasch und problemlos zu einem flugfähigen Staudruckprofil entfalten.

Vorteilhafte Weiterbildungen der Erfindung ergeben sich aus den Unteransprüchen.

Gemäß Anspruch 2 sind die Kappenanschlüsse, d. h. die Verbindungspunkte zwischen den einzelnen Leinen und der Gleitschirmkappe in Flugrichtung des Gleitschirmes bzw. in Längsrichtung des Schirmkappenprofils zueinander beabstandet angeordnet, so daß die vom rechten bzw. linken Riser ausgehenden zur linken bzw. zur rechten Schirmkappenhälfte verlaufenden Leinen sich in ihren Kreuzungsbereichen nicht berühren können. Dies hat den ganz erheblichen Vorteil, daß die aus einer Kunstfaser bestehenden Leinen sich beim Entfaltungsvorgang des Schirmes und auch bei bestimmten Flugmanövern in ihren Kreuzungsbereichen nicht berühren können, so daß auch keinerlei Gefahr dahingegend besteht, daß durch eine scheuernde Anlage zweier Leinen durch Reibungswärme eine oder beide Leinen durchgeschmolzen werden.

Sind gemäß Anspruch 3 wenigstens die das Hauptgewicht des Piloten tragenden Aufhängungen der Verleinung von jedem Hauptgurt aus zur jeweils gegenüberliegenden Seite der Kappe verlaufend angeordnet, werden die Vorteile des erfindungsgemäßen Gleitschirmes bei gleichzeitig verringertem Verleinungsaufwand voll beibehalten. Der Grund hierfür ist darin zu sehen, daß das Hauptgewicht des Piloten an den Leinenscharen der vorderen sogenannten A- und B-Aufhängung hängt, wohingegen die Leinenscharen der sogenannten C- und D-Aufhängung, die näher an der Hinterkante des Schirmkappenprofils angeordnet sind beim Tragen des Körpergewichtes des Piloten eine eher untergeordnete Rolle spielen.

Gemäß Anspruch 4 lassen sich die erfindungsgemäßen Vorteile und hier insbesondere die erheblich verbesserte Flugstabilität mit den Vorteilen verbinden, die sich aus einem Mehrdecker-Gleitschirm ergeben. Im Ergebnis läßt sich ein Gleitschirm bereitstellen, der bei hoher Flugleistung gleichzeitig sicher und stabil ist.

Weitere Einzelheiten, Aspekte und Vorteile der vorliegenden Erfindung ergeben sich aus der nachfolgenden Beschreibung unter Bezugnahme auf die Zeichnung.

Es zeigt:
- Fig. 1: schematisch vereinfacht eine Ansicht von vorne auf einen erfindungsgemäßen Gleitschirm bzw. dessen Verleinung; und
- Fig. 2: schematisch vereinfacht eine Seitenansicht des erfindungsgemäßen Gleitschirmes.

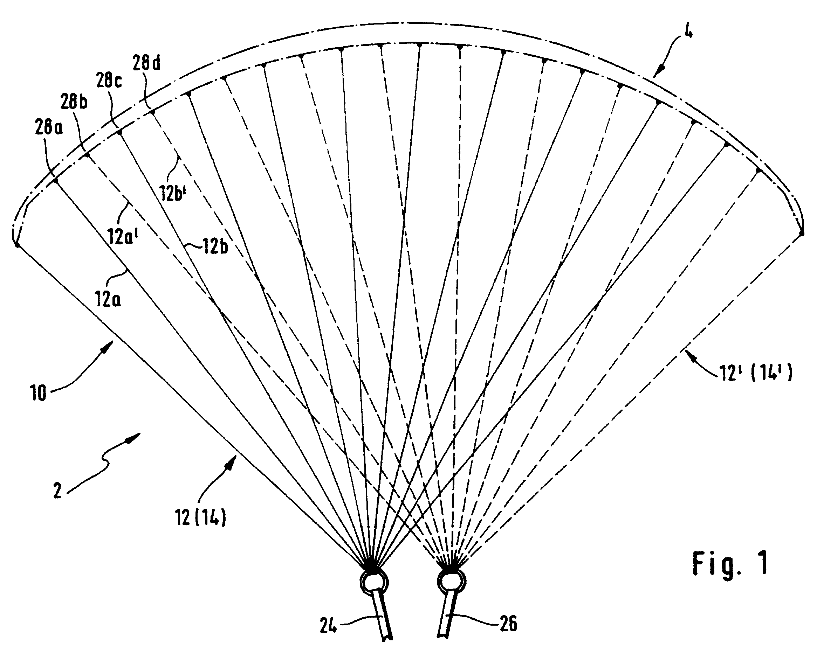

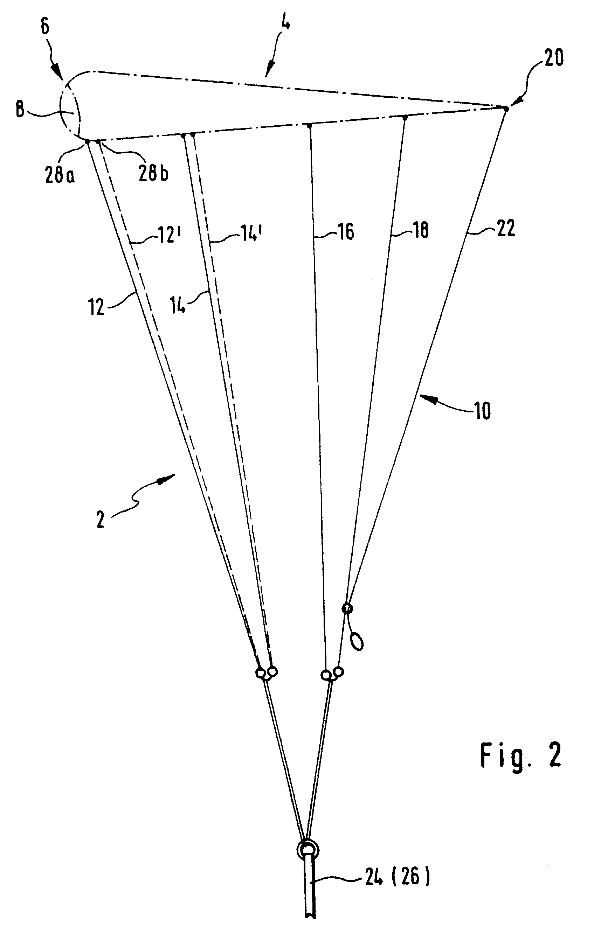

Aus Gründen der Übersichtlichkeit der Darstellung wurde in den Fig. 1 und 2 jeweils ein unterschiedlicher Darstellungsmaßstab verwendet.

In den Figuren 1 und 2 ist mit dem Bezugszeichen 2 der erfindungsgemäße Gleitschirm in seiner Gesamtheit bezeichnet. Der Gleitschirm 2 besteht in bekannter Weise aus einer Schirmkappe 4, welche in der Zeichnung strichpunktiert dargestellt ist. Die Schirmkappe 4 ist in bekannter Weise als Staudruckprofil ausgebildet, d. h. an einer vorderen Eintrittskante 6 der Schirmkappe 4 durch dortige Öffnungen 8 einströmende Luft bläst durch Staudruck die Schirmkappe 4 auf und verleiht dieser ein tragflächenartiges Profil. Die Schirmkappe 4 ist in bekannter Weise in eine Mehrzahl von durch Stegen voneinander getrennte Kammern unterteilt, wobei die Stege ihrerseits luftdurchlässig ausgebildet sind, um eine gleichmäßige Druckverteilung über die gesamte Längs- und Quererstreckung der Schirmkappe 4 hinweg zu erhalten.

Von der Unterseite der Schirmkappe 4 ausgehend ist eine in ihrer Gesamtheit mit dem Bezugszeichen 10 versehene Verleinung vorgesehen. Gemäß Fig. 2 ist hierbei seitlich gesehen die Verleinung 10 in eine Mehrzahl von Leinenscharen unterteilt, nämlich in eine von der Eintrittskante 6 ausgehende A-Aufhängung 12, 12' und sich daran in Flugrichtung des Gleitschirmes 2 gesehen nach hinten anschließende weitere Leinenscharen, nämlich eine B-Aufhängung 14, 14' eine C-Aufhängung 16 und eine D-Aufhängung 18. Im Bereich einer Hinterkante 20 der Schirmkappe 4 sind noch Steuerleinen 22 vorgesehen, mittels denen der Gleitschirm 2 im Flug lenkbar ist.

Ausgehend von der Unterkante der Schirmkappe 4 verläuft die Verleinung 10 nach unten in Richtung auf ein in der Zeichnung nicht näher dargestelltes Gurtzeug, in welchem der Pilot sitzt. Gemäß Fig. 1 sind ausgehend von dem Gurtzeug zwei Hauptgurte oder Riser 24 und 26 vorgesehen, an welchen die Leinenscharen der A- bis D-Aufhängungen zusammengefaßt werden. Gemäß Fig. 2 werden hierbei die A- und B-Aufhängungen 12 und 14 sowie die C- und D-Aufhängungen 16 und 18 vor der Befestigung an dem Riser 24 bzw. 26 vor-zusammengefaßt.

Insoweit entspricht der Aufbau des erfindungsgemäßen Schirmes dem Aufbau herkömmlicher Gleitschirme.

Wie insbesondere aus Fig. 1 hervorgeht, sind nun beim erfindungsgemäßen Gleitschirm 2 die von den Risern 24 und 26 ausgehenden Leinenscharen der Verleinung 10 nicht symmetrisch zu einer gedachten vertikalen Längsmittelachse des Gleitschirmes 2. Vielmehr sind die Leinenscharen der Verleinung 10 ausgehend von jedem Riser 24 oder 26 im wesentlichen über die gesamte Quererstreckung der Schirmkappe 4 verteilt angeordnet. Zur besseren Veranschaulichung ist hierzu in der Zeichnung die von dem in Fig. 1 linken Riser 24 ausgehende Leinenschar mit durchgezogenen Linien und die in Fig. 1 vom rechten Riser 26 ausgehende Leinenschar mit gestrichelten Linien dargestellt. Die Kappenanschlüsse 28a, 28b,..., d. h. die Befestigungs- oder Anschlußpunkte der einzelnen Leinen an der Unterseite der Schirmkappe 4 sind hierbei gemäß Fig. 1 alternierend angeordnet, so daß beispielsweise die von einem Kappenanschluß oder Anschlußpunkt 28a ausgehende Leine 12a zu dem Riser 24 verläuft, die von dem benachbarten Kappenanschluß oder Anschlußpunkt 28b ausgehende Leine 12a' zu dem Riser 26 verläuft, die wiederum benachbarte, vom Kappenanschluß oder Anschlußpunkt 28c ausgehende Leine 12b wieder zu dem Riser 24 verläuft usw.

Wie am besten aus Fig. 2 hervorgeht, sind hierbei die Kappenanschlüsse 28a, 28b, 28c,... in Längsrichtung der Schirmkappe 4 gesehen zueinander versetzt, so daß die Leinenscharen oder Aufhängungen 12 bzw. 12' oder auch 14 bzw. 14' in Längsrichtung der Schirmkappe 4 gesehen voneinander beabstandet sind. Hierdurch wird in vorteilhafter Weise sichergestellt, daß beim Start, d. h. bei dem Entfaltungs- und Aufform-Vorgang der Schirmkappe 4 die sich straffenden Einzelleinen in ihren Kreuzungspunkten nicht miteinander in Berührung oder reibender Anlage sind, so daß keine Gefahr besteht, daß die aus Kunststoffmaterial bestehenden Leinen bei scheuernder Anlage aneinander durch die entstehende Reibungswärme beschädigt werden oder gar reißen.

Die kreuzweise Verleinung des Gleitschirmes 2 kann an sämtlichen Leinenscharen, d. h. an der A-Aufhängung 12, 12', der B-Aufhängung 14, 14', der C-Aufhängung 16 und der D-Aufhängung 18 vorgenommen werden. In vorteilhafter Weise wird jedoch die Kreuzverleinung gemäß Fig. 2 lediglich an der A-Aufhängung 12, 12' und der B-Aufhängung 14, 14' vorgenommen, da das Hauptgewicht des im Gurtzeug bzw. an den Risern 24 und 26 hängenden Piloten an diesen beiden Aufhängungen 12 und 14 hängt. Die C-Aufhängung 16 und die D-Aufhängung 18 tragen zum Halten des Körpergewichts des Piloten relativ wenig bei, so daß für diese beiden Aufhängungen 16 und 18 auf die Kreuzverleinung gemäß Fig. 1 verzichtet werden kann. Es sei an dieser Stelle jedoch festgehalten, daß es dem jeweiligen Fachmann überlassen bleibt, wieviele und welche Aufhängungen über Kreuz von den Risern zur Schirmkappe 4 geführt werden. Entscheidungskriterien hierfür sind z. B. die Art des Gleitschirmes (Anfänger-, Trainings- oder Wettbewerbsschirm), zulässiges Maximalgewicht des Piloten etc.

Durch den erfindungsgemäßen Gleitschirm 2 wird erreicht, daß die gesamte Schirmkappe 4 gleichmäßig verteilt sowohl den Riser 24 als auch den Riser 26 trägt. Hierdurch wird die Stabilität des gesamten Gleitschirms 2 im Flug ganz erheblich verbessert. Im folgenden sei angenommen, daß durch eine turbulenzartige Luftströmung die in Fig. 1 linke Seite der Schirmkappe 4 einklappt. Bei bisherigen Gleitschirmen würde durch diesen seitlichen Einklappvorgang der Schirmkappe 4 ein Nachgeben der Leinen 12a und 12b und somit ein in Fig. 1 nach unten gerichtetes Absinken des Risers 24 erfolgen. Diese Absinkbewegung des Risers 24 würde durch ein Kippen des Körpers des Piloten noch weiter verstärkt werden. Zwar ist es einem geschulten Piloten in der Regel möglich, durch entsprechende Korrekturvorgänge die Einklapptendenz der Schirmkappe 4 abzufangen, wonach sich das Staudruckprofil durch die Querverbindungen zwischen den einzelnen Kappen der Schirmkappe 4 wieder aufbaut und sich der Schirm stabilisiert, dennoch kommt es immer wieder zu Beinahe-Abstürzen oder tatsächlichen Abstürzen, oft mit tödlichem Ausgang.

Bei dem erfindungsgemäßen Schirm ist durch die kreuzweise Verleinung beispielsweise der A-Aufhängung 12, 12' und der B-Aufhängung 14, 14' gemäß den Figuren 1 und 2 sichergestellt, daß bei einer Einklappbewegung beispielsweise der in Fig. 1 linken Seite der Schirmkappe 4 der linke Riser 24 nicht alleine durch einen Kippvorgang des Körpers des Piloten absinken und den Einklappvorgang verstärken kann, da die in Fig. 1 linke Seite der Schirmkappe 4 über die Leinen 12a', 12b', ... mit dem rechten Riser 26 verbunden ist. Somit kann der Körper des Piloten durch einen einseitigen Kipp- oder Pendelvorgang die Einklappbewegung des seitlichen Schirmrandes nicht verstärken, da die Gesamtlast des Piloten gleichmäßig über die gesamte Schirmquererstreckung verteilt abgehängt ist. Die zwischen den einzelnen Kammern der Schirmkappe 4 befindlichen Querverbindungen können somit das Staudruckprofil der Schirmkappe 4 schneller wieder aufbauen und der gesamte Gleitschirm 2 ist erheblich stabiler und sicherer im Flug.

Bei einem falschen Einhängen und somit Lösen des Karabiners, der den Riser 24 oder 26 mit dem Gurtzeug am Körper des Piloten verbindet oder bei einem Bruch eines dieser Karabiner war bislang bei herkömmlichen Gleitschirmen die zugehörige darüberliegende Hälfte der Schirmkappe 4 nicht mehr radial abgespannt und der Schirm verlor sein tragendes Staudruckprofil, was zu einem unkontrollierbaren Absturz führte.

Im Gegensatz hierzu ist bei dem erfindungsgemäßen Gleitschirm 2 jeder der Riser 24 und 26 über die gesamte Quererstreckung der Schirmkappe 4 hinweg mit dieser verbunden, so daß selbst bei einem Öffnen eines nicht korrekt geschlossenen Karabiners oder bei einem Bruch dieses Karabiners gefolgt von einem Lösen beispielsweise des Risers 24 vom Gurtzeug des Piloten der Pilot nach wie vor über den verbleibenden Riser 26 mit der gesamten Schirmkappe 4 verbunden bleibt, so daß zumindest eine kontrollierte Notlandung ohne weiteres möglich ist.

Weiterhin wird bei dem erfindungsgemäßen Gleitschirm 2 der Startvorgang erheblich erleichtert. Es ist bekannt, daß ein Pilot eines Gleitschirms beim Startvorgang die beiden Riser 24 und 26 an den ausgestreckten Armen schräg nach hinten oben hält und gegen den Wind anläuft, um hinter sich die Schirmkappe 4 durch Staudruck in das tragfähige Tragflächenprofil zu bringen. Wird hierbei bei einem herkömmlichen Gleitschirm ein asymmetrischer Zug über einen der Riser 24 und 26 auf die Schirmkappe 4 aufgebracht, wird also beispielsweise an dem Riser 24 während des Anlaufvorganges stärker gezogen, bricht die Schirmkappe 4 während des Startvorganges seitlich aus und der Start muß abgebrochen werden.

Beim erfindungsgemäßen Gleitschirm 2 bewirkt demgegenüber ein einseitiges Ziehen an einem der Riser 24 oder 26 während des Startvorganges keinerlei Ausbrechbewegungen der Schirmkappe 4, da beide Riser 24 und 26 gleichmäßig verteilt an der gesamten Quererstreckung der Schirmkappe 4 abgehängt sind. Der erfindungsgemäße Gleitschirm 2 zeichnet sich somit auch durch ein wesentlich vereinfachtes und gutmütigeres Startverhalten aus.

All diese Vorteile lassen sich in besonders vorteilhafter Weise noch mit den Vorteilen verbinden, die ein Mehrdecker-Gleitschirm bietet, wie er in der deutschen Patentanmeldung P 41 24 914.3 des selben Anmelders beschrieben ist. Auf den dortigen Offenbarungsgehalt wird hier insoweit vollinhaltlich Bezug genommen. Die in dieser Patentanmeldung beschriebenen Ausgestaltungen eines Gleitschirmes als Doppel- oder Mehrdecker ermöglichen bei unkritischerem Flugverhalten verbesserte Flugleistungen.

Die Möglichkeit, einen derartigen Doppel- oder Mehrdeckerschirm mit über Kreuz verlaufenden Leinenscharen nach Art der vorliegenden Erfindung auszustatten, ergibt in der Kombination einen Gleitschirm mit hervorragenden Flug- und Sicherheitsmerkmalen. Die Anbringung bzw. der Verlauf der Leinenscharen liegt hier weitestgehend in der Hand des jeweiligen Fachmannes, der den Schirm an die zu bringenden Leistungen anpaßt. So können beispielsweise sämtliche Leinenscharen in der Doppel- oder Mehrdeckeranordnung kreuzweise verlaufend angeordnet sein, oder nur einzelne Leinenscharen in allen oder nur einigen "Etagen" des Mehrdeckerschirmes.

Der erfindungsgemäße Gleitschirm läßt sich besonders vorteilhaft - aber nicht notwendigerweise - auch mit einem sogenannten Trapez fliegen. Ein derartiges Trapez stellt eine Verbindung zwischen den beiden Risern 24 und 26 im Bereich der dortigen Zusammenfassungspunkte (Karabiner) der zusammenlaufenden Aufhängungen 12, 12', 14, 14', 16, 18 her. Hierdurch werden die beiden Riser radial zusammengezogen. Die in Fig. 1 sichtbare, schräg verlaufende Anordnung der beiden Riser 24 und 26 wird hierdurch beibehalten und verbessert, d. h. stabilisiert die Sitzhaltung des Piloten. Außerdem wird eine Verbesserung der Öffnungssicherheit beim Zusammenklappen des Gleitschirmes erzielt, da die Riser 24 und 26 in einer radial gespreizten Stellung verbleiben, selbst dann, wenn eine Schirmkappenhälfte zusammenfällt. Die Wiederöffnung des Schirmes wird hierdurch gefördert.

Weiterhin ist die Ausbildung des Gurtzeuges nicht auf einen Einzelpiloten beschränkt. Ein Gleitschirm für Tandemflüge, bei dem beispielsweise für Schulungszwecke ein Pilot mit einer zweiten Person an einem Schirm hängt, läßt sich ebenfalls gemäß der vorliegenden Erfindung ausgestalten.

## Patentansprüche

1. Gleitschirm
mit wenigstens einer Kappe (4) mit einem unter Innendruck tragflügelähnlichen Profil,
mit einem zur Aufnahme wenigstens eines Piloten dienenden Gurtzeuges mit wenigstens zwei symmetrisch zur Längsmittelachse des Gleitschirms (2) angeordneten Hauptgurten (24, 26) und
mit zwischen Gurtzeug und Kappe (4) zu dortigen Anschlußpunkten (28a, 28b,... und 28a', 28b',...) der jeweils darüberliegenden Seite der Kappe (4) verlaufenden Leinen (10) zur Übertragung der Auftriebskräfte der Kappe (4) auf das Gurtzeug, wobei die Leinen (10) in in Profillängsrichtung der Kappe (4) hintereinander angeordneten separaten Aufhängungen (12, 14, 16, 18) zusammengefaßt sind,
dadurch gekennzeichnet, daß
von jedem Hauptgurt (24, 26) aus Leinen (12a, 12b,... und 12a', 12b',...) auch zu Anschlußpunkten der jeweils gegenüberliegenden Seite der Kappe (4) verlaufen.

2. Gleitschirm nach Anspruch 1, dadurch gekennzeichnet, daß die Anschlußpunkte (28a, 28b, 28c,...) einer von einem Hauptgurt (24, 26) verlaufenden Leinenschar (12, 14, 16, 18) einer Aufhängung (12, 14, 16, 18) gegenüber derjenigen der von dem anderen Hauptgurt (26, 24) derselben Aufhängung aus verlaufenden Leinenschar (12', 14', 16', 18') in Längsrichtung des Kappenprofils mit gegenseitigem Abstand angeordnet sind.

3. Gleitschirm nach Anspruch 1 oder 2, dadurch gekennzeichnet, daß wenigstens die das Hauptgewicht des Piloten tragenden Aufhängungen (12, 12', 14, 14') der Verleinung (10) von jedem Hauptgurt (24, 26) aus zur jeweils gegenüberliegenden Seite der Kappe (4) verlaufen.

4. Gleitschirm nach einem der Ansprüche 1 bis 3, dadurch gekennzeichnet, daß eine Mehrzahl von einzelnen Schirmkappen vertikal übereinander und radial abgespannt angeordnet ist.
